# EUROPÄISCHE PATENTSCHRIFT

(11) **EP 3 652 128 B1**
(45) Veröffentlichungstag und Bekanntmachung des Hinweises auf die Patenterteilung: **28.09.2022**
(21) Anmeldenummer: 18740091.6
(22) Anmeldetag: 07.06.2018
(51) Int. Cl.: C04B 35/56, C01B 21/06, C01B 35/04, C04B 35/58, C04B 35/626, C01B 32/907, C01B 32/914, C04B 41/50, C04B 41/45, C04B 41/51

(54) **VERFAHREN ZUR HERSTELLUNG VON NICHT OXIDISCHEN, KERAMISCHEN PULVERN**
PROCESS FOR THE MANUFACTURE OF NON-OXIDE CERAMIC POWDERS
PROCÉDÉ DE FABRICATION DE POUDRES CÉRAMIQUES NON-OXYDES

(30) Priorität: 13.07.2017 DE 102017006658
(43) Veröffentlichungstag der Anmeldung: 20.05.2020
(73) Patentinhaber: Forschungszentrum Jülich GmbH, 52425 Jülich (DE)
(72) Erfinder: DASH, Apurv, 52428 Jülich (DE); GONZALEZ, Jesus, 52066 Aachen (DE); VAßEN, Robert, 52134 Herzogenrath (DE); GUILLON, Olivier, 52428 Jülich (DE)
(86) Internationale Anmeldenummer: PCT/DE2018/000178
(87) Internationale Veröffentlichungsnummer: WO 2019/011358

(56) Entgegenhaltungen:
- YANG ET AL: "Molten salt synthesis of Mo"2C powder using a mechanically milled powder", MATERIALS LETTERS, ELSEVIER, AMSTERDAM, NL, Bd. 61, Nr. 26, 1. Oktober 2007 (2007-10-01), Seiten 4815-4817, XP022230643, ISSN: 0167-577X, DOI: 10.1016/J.MATLET.2007.03.040 in der Anmeldung erwähnt
- YANG R ET AL: "Molten salt synthesis of tungsten carbide powder using a mechanically activated powder", INTERNATIONAL JOURNAL OF REFRACTORY METALS AND HARD MATERIALS, ELSEVIER, AMSTERDAM, NL, Bd. 29, Nr. 1, 1. Januar 2011 (2011-01-01) , Seiten 138-140, XP027433984, ISSN: 0263-4368, DOI: 10.1016/J.IJRMHM.2010.09.008 [gefunden am 2010-10-01]
- GUO XUE ET AL: "Preparation of Ti3SiC2powders by the molten salt method", MATERIALS LETTERS, Bd. 111, 23. August 2013 (2013-08-23), Seiten 211-213, XP028728941, ISSN: 0167-577X, DOI: 10.1016/J.MATLET.2013.08.077 in der Anmeldung erwähnt
- TIAN W B ET AL: "Cr2AlC powders prepared by molten salt method", JOURNAL OF ALLOYS AND COMPOUNDS, ELSEVIER SEQUOIA, LAUSANNE, CH, Bd. 461, Nr. 1-2, 11. August 2008 (2008-08-11), Seiten L5-L10, XP022708663, ISSN: 0925-8388, DOI: 10.1016/J.JALLCOM.2007.06.094 [gefunden am 2008-06-07]

## Beschreibung

Die Erfindung bezieht sich auf die Herstellung von nicht oxidischen, keramischen Pulvern, umfassend Nitride, Karbide oder Boride, und dabei insbesondere auch auf die Synthese von MAX-Phasen-Pulvern.

### Stand der Technik

Es ist bekannt, dass die Synthesen von nicht oxidischen Materialien immer in einer geschützten Atmosphäre oder im Vakuum durchgeführt werden, um eine Oxidation des Materials bei Anwesenheit von Sauerstoff zu unterbinden. Daher ist es eine unvermeidbare Anforderung, dass das Prozessieren von nicht oxidischen Materialien, die vor einer ungewollten Oxidation geschützt werden müssen, regelmäßig in einer geschützten Atmosphäre von Argon, Stickstoff oder im Vakuum erfolgt.

Die Synthesen von MAX-Phasen werden derzeit ebenfalls unter Argon oder im Vakuum bei Temperaturen bis oberhalb von 1000 °C durchgeführt. Unter einer MAX-Phase wird eine Verbindung mit der allgemeinen Formel Mₙ₊₁AXₙ verstanden, mit M = Übergangselement (z. B. Ti, V, Cr, ...), A = A-Gruppen-Element (Al, Si,..), X = Kohlenstoff oder Stickstoff und n = 1, 2 oder 3. Die MAX-Phasen stellen nach allgemeiner Definition eine Gruppe von ternären Nitriden und Karbiden dar. Die Herstellung der MAX-Phasen erfolgt regelmäßig in einem Sinterschritt, der im Allgemeinen auch als "reaktives Sintern" bezeichnet wird. In einem solchen Prozessschritt ist es jedoch nicht möglich, die MAX-Phase als freies Pulver herzustellen, welches für weitere konturgebende Prozesse benötigt würde.

Das erste Beispiel einer MAX-Phase (Ti₃SiC₂) wurde erstmals von Jeitschko und Nowotny hergestellt, in dem vermischtes Titanhydrid, Silizium und Graphit in einem Graphittiegel bei 2000 °C aufgeheizt wurden ^{[1]}. Diese hohen Temperaturen machen eine MAX-Synthese in großen Maßstab jedoch unrentabel.

Barsoum et al. setzten beispielsweise ein gemischtes Pulver aus Titan, Kohlenstoff und Siliziumcarbid für die Herstellung einer MAX-Phase (Ti₃SiC₂) ein, wobei sie die Pulvermischung bei 1600 °C heiß verpressten und dabei einen uniaxialen Druck von 40 MPA einstellten ^{[2]}. Die so hergestellte MAX-Phase war vollständig dicht und zeigte eine einfache Form, welche für eine weitere Konturgebung ebenfalls maschinell bearbeitet werden musste. Um mit Hilfe des vorgenannten Prozesses aus dem dichten Material freies MAX-Phasen-Pulver herzustellen, würde insofern einen zusätzlichen Mahl- oder Schleifprozess erfordern. Monolithisches Ti₃SiC₂ ist auch bereits über die Methode der chemischen Gasphasenabscheidung (engl. chemical vapour deposition, CVD) synthetisiert worden, wobei chloridische Vorstufen von Titan, Silizium und Kohlenstoff eingesetzt wurden ^{[3]}.

Die Nachteile dieser Methode zur Herstellung von MAX-Phasen im Allgemeinen sind die geringe Abscheidungsrate und die teuren und oftmals giftigen Vorstufen. Zudem ist die CVD nicht geeignet, um Pulver zu synthetisieren, sondern nur geeignet zur Abscheidung dünner Filme bzw. Schichten auf einem Substrat.

Alle vorgenannten Verfahren beschreiben die Herstellung von MAX-Phasen-Pulvern in geschützter Atmosphäre von Argon oder Stickstoff oder unter Vakuum.

Ebenfalls bekannt ist der Syntheseweg für oxidische und karbidische keramische Pulver über eine Salzschmelze. Auch bei diesem Verfahren wird immer eine geschützte Atmosphäre oder Vakuum eingestellt, was die Kosten für eine solche Synthese in die Höhe treibt.

Guo et al. haben bereits eine Ti₃SiC₂ MAX-Phase über eine Salzschmelze aus NaCl als Flussmittel unter Schutzgasatmosphäre (Argon) hergestellt ^{[4]}.

W.B. Tian et al. [7], "Cr2AC powders prepared by molten salt method", JOURNAL OF ALLOYS AND COMPOUNDS, Bd. 461, Nr. 1-2, 11. August 2008, Seiten L5-L10, haben ein Cr₂AlC-Pulver bereits mit Hilfe einer Salzschmelze synthetisiert, für die eine Mischung aus NaCl und KCl im Verhältnis 1:1 als Flussmittel eingesetzt wurde. Die Reaktionsmischung wurde unter Vakuum in ein Quarzrohr gefüllt und bei hohen Temperaturen wärmebehandelt. Auch dieser Prozess benötigt immer eine geschützte Atmosphäre oder Vakuum, um die Reaktionen bei den hohen Temperaturen zu vermitteln.

Aus R. Yang et al. ^{[6]}, "Molten salt synthesis·of Mo₂C powder using a mechanically milled powder",

Mater. Lett., 61, 2007, 4815-4817 ist ein Verfahren zur Herstellung von Mo₂C bekannt, bei dem ein Mo-C-Pulver mit NaCl und KCl vermischt und daraus Probekörper hergestellt werden. Diese werden in eine Salzschmelze gegeben und 60 min bei 1000 °C wärmebehandelt.

R. Yang et. al. [8], "Molten salt synthesis of tungsten carbide powder using a mechanically activated powder", INTERNATIONAL JOURNAL OF REFRACTORY METALS AND HARD MATERIALS, Bd. 29, Nr. 1, Januar 2011, Seiten 138-140, haben auch ein Verfahren zur Herstellung eines WC-Pulvers offenbart, bei dem ein W-C-Pulver mit NaCl und KCl vermischt und daraus Probekörper kalt verpresst werden. Diese werden in eine Salzschmelze gegeben und 60 min bei 1000°C wärmebehandelt. Schließlich werden die Körper abgekühlt und das Salz mit Wasser weggespült.

Ferner ist aus X. Guo et al. [4], "Preparation of Ti3SiC2 powders by the molten salt method", Materials Letters 2013, Vol. 111, S. 211-213 ein Herstellungsverfahren für MAX-Phasen offenbart. Hier wurde Ti₃SiC₂-Pulver erfolgreich mit der Schmelzsalzmethode unter Verwendung von NaCl als Flussmittel gewonnen. Der Sauerstoffausschluss wurde durch Sintern in einer ArgonAtmosphäre erreicht.

### Aufgabe und Lösung

Die Aufgabe der Erfindung ist es, einen alternativen Syntheseweg für die Herstellung von nicht oxidischen, keramischen Pulvern, und dabei insbesondere von MAX-Phasen-Pulvern anzugeben, der gegenüber den bisherigen Verfahren deutlich kostengünstiger und zudem auch einfacher zu handhaben ist.

Die Aufgabe der Erfindung wird gelöst durch ein Verfahren zur Herstellung von nicht oxidischen, keramischen Pulvern mit den Merkmalen des Hauptanspruchs. Vorteilhafte Ausgestaltungen des Verfahrens ergeben sich aus den darauf rückbezogenen Ansprüchen.

### Gegenstand der Erfindung

Im Rahmen der Erfindung wurde herausgefunden, dass es möglich ist, bei der Herstellung von nicht oxidischen, keramischen Pulvern auf die bislang übliche Schutzatmosphäre, bzw. den Einsatz im Vakuum zu verzichten, ohne dass das nicht oxidische Material eine Oxidation erfährt.

Die Erfindung betrifft die Herstellung (Synthese) von nicht oxidischen, keramischen Pulvern, umfassend Nitride, Karbide oder Boride, und insbesondere die Herstellung von keramischen Pulvern, umfassend so genannte MAX-Phasen. Bei dem erfindungsgemäßen Verfahren werden die elementaren Ausgangsstoffe oder andere Vorstufen als Pulver, die die notwendigen Elemente zur Ausbildung des nicht oxidischen, keramischen Materials aufweisen, mit wenigstens einem Metallhalogensalz vermischt und in Anwesenheit von Luft bzw. Sauerstoff zusammen mit wenigstens einem Metallhalogensalz bis über dessen Schmelzpunkt aufgeheizt, so dass das zu synthetisierende Pulver in einer Salzschmelze (Schmelzpool) angeordnet ist, die eine jegliche Sauerstoffzufuhr zu den nicht oxidischen, keramischen Pulvern wirksam verhindert. Die typischen Synthesetemperaturen für MAX-Phasen liegen dabei zwischen 800 und 1400 °C.

Dazu können vorzugsweise die elementaren Ausgangsstoffe oder andere Vorstufen als Pulver in einem nicht-reaktiven organischen Lösungsmittel oder in Wasser dispergiert oder auch trocken vermischt werden.

Das beigemischte Metallhalogensalz bildet bei höheren Temperaturen oberhalb seiner Schmelztemperatur eine Salzschmelze aus, und fungiert dabei als ein Medium, in dem einerseits die einzelnen Atome der Ausgangsstoffe bzw. Vorstufen leicht diffundieren können, und welches auf der anderen Seite als Schutz vor dem vorhandenen Sauerstoff dient. Dazu bildet die Salzschmelze einen undurchlässigen Schmelzpool aus, der eine kaum von Null verschiedene Löslichkeit für Sauerstoff aufweist. Dadurch wird ein Lösen des Sauerstoffs aus der vorhandenen Sauerstoff-haltigen Atmosphäre in dem Schmelzpool wirksam unterbunden. Die Salzschmelze wirkt insofern als eine Art Oxidationsbarriere zwischen den oxidationsanfälligen, nicht oxidischen, keramischen Pulvern und der sie umgebenden Sauerstoff haltigen Atmosphäre.

Das erfindungsgemäße Verfahren ist insbesondere zur Herstellung (Synthese) von Pulvern, umfassend wenigstens eine MAX-Phase, geeignet. Eine MAX-Phase weist die allgemeine Zusammensetzung Mₙ₊₁AXₙ auf, mit M = wenigsten ein Element aus der Gruppe der Übergangselemente (Sc, Ti, V, Cr, Zr, Nb, Mo, Hf und Ta), A = wenigstens ein A-Gruppen-Element aus der Gruppe (Si, Al, Ga, Ge, As, Cd, In, Sn, Tl und Pb), X = Kohlenstoff (C) und/oder Stickstoff (N) und/oder Bor (B) und n = 1, 2 oder 3. Die Plätze A, M und X können dabei jeweils von mehr als einem Element eingenommen werden.

Es wird darauf aufmerksam gemacht, dass im Rahmen dieser Erfindung neben Carbiden und Nitriden auch Boride von der Sammelbezeichnung einer MAX-Phase umfasst sein sollen. Diese weisen zwar nicht dieselben Kristallstrukturen, wie die aus dem Stand der Technik bekannten MAX-Phasen, auf, sondern liegen regelmäßig geschichtet als M₂AB₂ oder MAB vor. Sie weisen jedoch aufgrund ihrer nanolaminierten Struktur einige gemeinsame Eigenschaften mit den bekannten MAX-Phasen auf und werden daher in dieser Erfindung unter diesem Begriff zusammengefasst.

Auch wenn erfindungsgemäß die Synthese wenigstens eines nicht oxidischen, keramischen Pulvers, beispielsweise einer MAX-Phase, d. h. also auch von mehr als einer MAX-Phase, gleichzeitig in einem Verfahrensschritt möglich ist, wird aus Vereinfachungsgründen im Folgenden in der Anmeldung das erfinderische Verfahren zur Herstellung von nicht oxidischen, keramischen Pulvern am Beispiel eines MAX-Phasen-Pulvers offenbart, ohne dass diese eine Einschränkung des offenbarten Verfahrens bedeuten soll.

Das erfindungsgemäße Verfahren umfasst den Schritt der Synthetisierung einer MAX-Phase durch Aufheizen der entsprechenden pulverförmigen Ausgangsmaterialien, in Form der reinen Elemente oder sonstiger Vorstufen, in einem Metallhalogensalz (NZ), mit N = wenigstens ein Element aus der Gruppe (Li, Na, K, Ru, Cs, Mg, Be, Ca, Sr, Ba) und Z = wenigstens ein Element aus der Gruppe (F, Cl, Br, I), oder in einer Mischung entsprechender Metallhalogensalze.

Das Verfahren kann vorteilhaft in Anwesenheit von Luft bzw. einer Sauerstoff haltigen Atmosphäre durchgeführt werden, so dass vorteilhaft auf eine Schutzgasatmosphäre oder auf den Einsatz von Vakuum verzichtet werden kann.

Die Synthese des MAX-Phasen-Pulvers wird dabei durch die Salzschmelze unterstützt. Die Wirkung der Salzschmelze ist derart, dass sie einerseits die Oxidation des nicht oxidischen, keramischen Materials, und dabei sowohl die der pulverförmigen Ausgangsmaterialien als auch die der synthetisierten MAX-Phase, während der Hochtemperaturbehandlung (Synthese) verhindert und zudem als Flussmittel die Synthesetemperatur vorteilhaft erniedrigen kann. Das eingesetzte Salz bzw. die Salzschmelze können sowohl ein einziges Salz oder auch eine Salzmischung aufweisen, wodurch vorteilhaft auch eine Anpassung der Verfahrensparameter an die Synthese der entsprechenden MAX-Phasen-Pulver ermöglicht wird. Es ist bereits bekannt, dass der Zusatz von Dotierstoffen zu einer Verbesserung der Synthese führen kann. Als Dotierstoffe kommt beispielsweise Aluminium mit einem Anteil von maximal 25 Gew.-% in Bezug auf das nicht oxidische Pulver in Betracht.

Das erfindungsgemäße Verfahren macht insbesondere den Einsatz von teuren, unter Schutzgas betriebenen Öfen oder den Einsatz im Vakuum überflüssig, und verringert dadurch regelmäßig die Herstellungskosten. Damit wird durch diese Erfindung vorteilhaft ein Herstellungsverfahren von nicht oxidischen, keramischen Pulvern, insbesondere von MAX-Phasen-Pulvern, auch für den Großeinsatz bereitgestellt.

Das erfindungsgemäße Verfahren wird nachfolgend detaillierter beschrieben.

Erfindungsgemäß werden stöchiometrische Mengen (Mol) an pulverförmigen Ausgangsmaterialien, umfassend M, A und X als reine Elementpulver oder entsprechende Vorstufen, zusammen mit wenigstens einem Metallhalogensalz vermischt, wobei Chloride oder Bromide des Natriums oder des Kaliums aufgrund ihrer geringen Schmelzpunkte und großen Löslichkeit in Wasser als Metallhalogensalz besonders vorteilhaft sind.

Für das massenmäßige Mischungsverhältnis von Ausgangspulver zu Metallhalogensalz kann ein sehr großer Bereich, von beispielsweise 20:1 bis 1:100 gewählt werden. Damit das zugemischte Salz als Flussmittel zur Verbesserung der Diffusion der Ausgangspulver seine Funktion erfüllen kann, ist jedoch ein Anteil von wenigstens 5 Gew.-%, besser noch 10 Gew.- % von Vorteil.

Die Mischung wird anschließend vermischt, um eine gleichmäßige Verteilung von Ausgangspulvern und Salz zu gewährleisten. Das Vermischen kann beispielsweise durch Schütteln oder Rühren mit einem Magnetrührer erfolgen. Auch das Mahlen in einer Kugelmühle ist ein geeignetes Verfahren zum Vermischen der Komponenten.

Das Mischen von Ausgangspulvern und Salz kann zudem trocken oder auch unter Zugabe eines nicht-reaktiven organischen Lösungsmittels und/oder auch Wasser erfolgen.

Die Partikelgrößen der Ausgangspulver spielen bei der Synthese eine nur untergeordnete Rolle und können daher vorteilhaft aus einem sehr weiten Bereich ausgewählt werden, beispielsweise von Nanopulvern bis zu Pulvern mit Teilchen im Millimeterbereich. Besonders vorteilhaft hat sich allerdings der Einsatz von Pulver mit Teilchengrößen im µm-Bereich herausgestellt.

Die Mischung wird anschließend gegebenenfalls getrocknet und zu einem Grünkörper (Pellet) verfestigt, wobei zunächst einseitig bei moderaten niedrigen Temperaturen bis maximal 200 °C, vorzugsweise jedoch bei Raumtemperatur, uniaxial Druck ausgeübt wird und anschließend eine kalt-isostatische Pressung erfolgt. Das Verpressen erfolgt regelmäßig bei Drücken zwischen 10 MPA und 1000 MPA, vorteilhaft zwischen 50 MPA und 500 MPA.

Das zugemischte Salz unterstützt dabei die Verdichtung und damit die Dichte des hergestellten Grünkörpers.

In einem weiteren Schritt erfolgt das Umschließen des Grünkörpers mit einem Metallhalogensalz, beispielsweise über uniaxiales Verpressen oder isostatisches Pressen der bereits verpressten Pellets in einer Pressform, die einen größeren Durchmesser als die der bereits verpressten Pellets aufweist. Das hierfür eingesetzte Metallhalogensalz kann identisch mit dem Salz sein, welches bereits in den Pellets eingesetzt wurde. Dies ist aber nicht zwingend erforderlich.

Das vollständige Umschließen (Ummantelung) des verfestigten, keramischen Pulvermaterials mit Metallhalogensalz bewirkt vorteilhaft, dass eine Barriere zwischen der vorhandenen sauerstoffhaltigen Atmosphäre und den reaktiven Komponenten der Pulvermischung des Grünkörpers geschaffen wird. Für die hermetische Abdichtung der Ummantelung der reaktiven Mischung im Inneren ist insbesondere die hohe Dichte des gepressten Salzes der Ummantelung verantwortlich.

Das verpresste Salz in der Ummantelung weist regelmäßig eine theoretische Dichte von mehr als 90 %, vorteilhaft sogar mehr als 95 % auf. Das verpresste Salz weist dann zwar immer noch einzelne Poren auf, diese sind allerdings nicht durchgehend, so das in Summe bezogen auf das darin eingebettete Pellet eine hermetische, gasdichte Abdichtung vorliegt.

KBr hat sich insofern als besonders geeignetes Metallhalogensalz für eine Ummantelung herausgestellt, da es bereits bei Raumtemperatur bis zur theoretischen Dichte sehr gut verpresst werden kann und somit eine sehr gute, hermetische Abdichtung für den darin enthaltenen Grünkörper darstellt. Weiterhin konnte auch NaCl, sogar mit etwas Zusatz von Wasser, bei Raumtemperatur sehr gut, d. h. nahezu gasdicht, um ein Pellet verpresst werden.

Halogensalze können zu Grünkörperdichten von mehr als 95 % ihrer theoretischen Dichte verdichtet werden. Dieses Phänomen beruht auf der Duktilität von Halogensalzen unter bestimmten Druckbedingungen bei Raumtemperatur. Der Grünkörper weist eine geringe Porosität auf, aber bei dieser Porosität handelt es sich um geschlossene Poren, so dass die Ummantelung im Rahmen dieser Erfindung als gasdicht zu betrachten ist.

Permeabilitätsmessungen mit Helium/Luft an KBr-Tabletten führten zu Durchlässigkeitswerten von 1,4 · 10⁻⁷ hPa·dm³·s⁻¹, was im Sinne der vorliegenden Erfindung als gasdicht bezeichnet werden kann.

Eine erste Ausführungsform der Erfindung sieht vor, dass das mit Salz umschlossene Pellet (Grünkörper) nunmehr in einem geeigneten Behältnis, beispielsweise einem Schmelztiegel, in einem Bett aus Metallhalogensalz angeordnet (Salzbett) wird. Das hierfür eingesetzte Metallhalogensalz kann wiederum identisch mit dem Metallhalogensalz sein, welches bereits in den Pellets und/oder für die Ummantelung eingesetzt wurde. Dies ist aber nicht zwingend erforderlich.

Die Anordnung in einem Metallhalogensalzbett bedeutet im Rahmen dieser Erfindung, dass das Pellet hierbei vollkommen von diesem Metallhalogensalz umschlossen ist. Das Metallhalogensalzbett weist dabei zunächst eine gewisse Porosität auf, die erst beim vollständigen Aufschmelzen verloren geht.

Der Schmelztiegel mit dem Salzbad und dem darin eingebetteten und mit Salz ummantelten Pellet werden zusammen aufgeheizt. Dies kann beispielsweise in einem Ofen mit einer Widerstandserwärmung erfolgen. Bei diesem Aufheizschritt wird vorzugsweise kein zusätzlicher Druck angewendet. Die Erwärmung erfolgt dabei bis wenigstens 300 °C, bzw. bis zur Schmelztemperatur des eingesetzten Metallhalogensalzes. Wurden mehrere unterschiedliche Metallhalogensalze eingesetzt erfolgt die Aufheizung bis wenigstens zu der Temperatur, bei der die Salzmischung aufschmilzt und eine flüssige Salzschmelze ausbildet. Die Synthese des nicht oxidischen, keramischen Pulvers erfolgt zwar auch schon bei tieferen Temperaturen, zur Erzielung einer guten Ausbeute sind jedoch im Einzelfall höhere Temperaturen auszuwählen. Eine maximale Temperatur von 1400 °C sollte jedoch in der Regel nicht überschritten werden, da andernfalls die Gefahr besteht, dass das eingesetzte Metallhalogensalz oder eine eingesetzte Metallhalogensalzmischung in nicht unerheblichem Maße verdampft.

Die Metallhalogensalzschmelze fungiert dabei ebenfalls als ein Medium, welches als Schutz vor dem vorhandenen Sauerstoff dient. Dazu bildet die Salzschmelze einen undurchlässigen Schmelzpool aus, der eine kaum von Null verschiedene Löslichkeit für Sauerstoff aufweist. Dadurch wird ein Lösen des Sauerstoffs aus der vorhandenen sauerstoffhaltigen Atmosphäre in dem Schmelzpool wirksam unterbunden. Die Salzschmelze wirkt insofern als eine Art Oxidationsbarriere zwischen den oxidationsanfälligen, nicht oxidischen, keramischen Pulvern und der sie umgebenden sauerstoffhaltigen Atmosphäre.

Vorteilhaft muss bei diesem Verfahrensschritt, anders als beim bisherigen Stand der Technik, insofern keine besondere inerte Atmosphäre eingestellt werden. Das Verfahren kann somit auch an Luft durchgeführt werden.

Die hermetische Ummantelung des Pellets dient bei diesem Verfahrensschritt insbesondere der Abschottung des Pellets vor Sauerstoff, welches andernfalls in der zunächst porösen Metallhalogensalzschüttung während des Aufheizvorganges bis zur Schmelze des Salzes bzw. bis zur gewünschten maximalen Synthesetemperatur zu einer ungewollten Oxidation der reaktiven Ausgangspulver führen könnte.

Nach dem Aufheizschritt wird der Schmelztiegel wieder abgekühlt und der Inhalt (synthetisierte MAX-Phase in einem Salzbett) in eine Flüssigkeit, vorzugsweise in ein Wasserbad gegeben, wobei sich das Salz in der Flüssigkeit auflöst und das Pellet mit dem synthetisierten nicht oxidischen, keramischen MAX-Phasen-Pulver übrig bleibt. Optional kann die Flüssigkeit, insbesondere das Wasser, zur Verbesserung der Löslichkeit des Salzes dazu erwärmt werden. Als Flüssigkeit kommen neben reinem Wasser auch wässrige Lösungen oder kurzkettige Alkohole in Betracht. Bei diesem Verfahrensschritt löst sich sowohl das Salz aus dem Salzbad als auch das Salz, welches zusammen mit dem bereits verpressten Pellet erneut verpresst wurde, derart vollständig in der Flüssigkeit auf, so dass das synthetisierte, nicht oxidische, keramische MAX-Phasen-Pulver entnommen werden kann. Ferner wird damit auch das Salz entfernt, welches zu Beginn zusammen mit den Ausgangspulvern /Vorstufen vermischt wurde, sodass nur noch die reine nicht oxidische, keramische Phase, insbesondere wenigstens eine MAX-Phasenverbindung, vorliegt.

In einer weiteren vorteilhaften Ausgestaltung der Erfindung wird analog zu der vorhergehenden Verfahrensvariante ein Schmelztiegel mit wenigstens einem Metallhalogensalz mit einem mit dem Salz ummantelten Pellet zunächst bis oberhalb der Schmelztemperatur des Salzbades aufgeheizt. Auch hier kann im Anschluss die Temperatur des Metallhalogensalzbades, wie bei der vorgenannten Ausführungsform, weiter erhöht werden, beispielsweise auf über 800 °C. Eine Aufheizung auf Temperaturen oberhalb von 1400 °C sollten jedoch regelmäßig vermieden werden.

Parallel zu diesem Verfahrensschritt kann optional wenigstens ein Silikat, vorzugsweise ein Natrium-, Kalium- oder Lithiumsilikat (Na₂SiO₃ K₂SiO₃ oder Li₂SiO₃) ebenfalls in einem weiteren Schmelztiegel aufgeheizt. Vorteilhaft erfolgt dieser Schritt im selben Ofen, wo das Metallhalogensalzschmelzbad mit dem Grünkörper aufgeheizt wird, so dass das geschmolzene Silikat und die Salzschmelze mit dem Pellet dieselbe Temperatur aufweisen.

Bei einer Temperatur oberhalb der Schmelztemperatur des eingesetzten Silikats, also beispielsweise um 1100 °C für Natriumsilikat mit einem Schmelzpunkt Tₘ = 1088 °C, wird das geschmolzenen Silikat vorsichtig auf die Oberfläche des Salzbades mit dem Pellet aufgebracht, im einfachsten Fall gegossen. Aufgrund des Dichteunterschieds zwischen dem geschmolzenen Metallhalogensalz aus dem Salzbad und dem geschmolzenen Silikat und aufgrund der gegenseitigen Unlöslichkeit schwimmt das geschmolzene Silikat auf dem geschmolzenen Salz auf. Das aufschwimmende Silikat verhindert so vorteilhaft ein ungewolltes Verdunsten des geschmolzenen Salzes aus dem Salzbad. Auf diese Weise kann die Temperatur für die Synthese im Bedarfsfall sogar auf über 1400 °C bis maximal 1600 °C erhöht werden, ohne dass es zu einem nennenswerten Verlust an Salz aus dem Salzbad kommt.

Es folgt die Abkühlung und das Auflösen sowohl des Metallhalogensalzes als auch vorzugsweise des eingesetzten Silikats in einer Flüssigkeit analog zur den ersten Ausführungsformen. Das so erhaltene Pellet weist nunmehr nur noch das gewünschte synthetisierte, nicht oxidische, keramische Pulver auf.

Je nach Zusammensetzung der Mischung aus den Ausgangspulvern und eingestellter Maximaltemperatur wird ein mehr oder weniger reines Pulver der gewünschten Zusammensetzung als Hauptphase erhalten. Nicht reagierte Ausgangspulver und Dotierstoffe fallen gegebenenfalls als Nebenphasen an. Die Reinheit des gewünschten Pulvers kann insofern verbessert werden, indem am Anfang entsprechend stöchiometrische Mengen der entsprechenden Ausgangspulver oder Vorstufen eingesetzt werden und die Temperatur entsprechend der Zusammensetzung im Metallhalogensalzbad ausreichend hoch eingestellt wird. Es wird nochmals festgehalten, dass das erfindungsgemäße Verfahren die Herstellung eines nicht oxidischen, keramischen Pulvers aus den entsprechenden Ausgangsstoffen oder Vorstufen bereitstellt (Synthese) beschreibt, und insofern keinen Sinterschritt umfasst.

Die vorliegende Erfindung verhindert vorteilhaft hohe Kosten, die für die bislang notwendigen aufwändigen Kontrolle der Ofenatmosphären anfallen, und ermöglicht so eine preisgünstige großtechnische Herstellungsvariante für nicht oxidische, keramische Pulver, insbesondere von Pulvern umfassend wenigstens eine MAX-Phase oder auch für einfache Carbide. Diese können dann vorteilhaft für die Herstellung von Bauteilen, insbesondere einer weitere Konturierung, Verdichtung oder Konsolidierung eingesetzt werden.

### Spezieller Beschreibungsteil

Im Weiteren wird die Erfindung anhand von mehreren Ausführungsbeispielen näher erläutert, ohne dass dies zu einer Einschränkung des breiten Schutzumfanges führen soll.

Zur erfindungsgemäßen Herstellung eines nicht oxidischen, keramischen Pulvers, umfassend wenigstens eine MAX-Phase, werden stöchiometrische Mengen/Massen an elementaren Ausgangsstoffen oder entsprechenden Vorstufen, die die notwendigen Elemente zur Ausbildung des nicht oxidischen, keramischen Materials bilden, mit wenigstens einem Metallhalogensalz vermischt und in Anwesenheit von Luft bzw. Sauerstoff jeweils bis auf Temperaturen bis oberhalb der Schmelztemperatur des Metallhalogensalzes aufgeheizt.

### 1. Beispiel:

Im vorliegenden Fall wurden zur Herstellung von Ti₃SiC₂ Pulver Ti (99,9 % rein, -325 mesh ≅ 44 µm), Si (99,9 % rein, -325 mesh) und Graphit (99,9 % rein) mit NaCl vermischt, wobei ein Massenverhältnis von Ti/Si/C von 3:1:2 eingestellt wurde. Das Massenverhältnis von Ti+Si+C zu NaCl betrug 1:1.

Zusätzlich wurde zur Verbesserung der Reinheit des Endprodukts reines Aluminium (99,9 % rein, -325 mesh, entspricht ca. 44 µm) als Dotierung zugegeben. Der Anteil an Aluminium im Endprodukt wurde dabei zwischen 0,01 und 0,3 Mol-% variiert.

Die Pulver wurden nass, d. h. in Ethanol, und unter Zuhilfenahme von Zirkonium Kugeln mit einem Durchmesser von 5 mm für 24 Stunden vermischt, bzw. vermahlen. Die Schlammmischung wurde anschließend in einem Rotationsverdampfer bei 60 °C vorgetrocknet und anschließend in einem Ofen bei 70 °C für weitere 24 Stunden getrocknet.

Das getrocknete Pulver wurde uniaxial bei 200 MPa verpresst (Pellets) und anschließend mit NaCl ummantelt. Dazu wurden die Pellets in einen mit NaCl gefüllten Tiegel mit einem größeren Durchmesser als die Pellets gegeben, mit NaCl abgedeckt und anschließend erneut bei 200 MPa verpresst. Die so mit NaCl ummantelten Pellets wurde zusätzlich bei einem Druck von 300 MPa kalt isostatisch verpresst.

Anschließend wurden die Pellets in ein Bett aus NaCl eingebettet und in einem Schmelztiegel unter Luft bis auf Temperaturen von ca. 1200 °C aufgeheizt und eine Stunde bei dieser Temperatur gehalten. Der Schmelzpunkt von reinem NaCl beträgt 801 °C. Nach der Abkühlung wurde das Salz mit Wasser abgewaschen und so das Pellet mit der reaktiven Pulvermischung erhalten.

Die Charakterisierung der Pulvermischung erfolgte mittels Röntgenbeugung. Es wurde Ti₃SiC₂ als Hauptphase mit einer Reinheit von nahezu 100 % nachgewiesen, wobei die Aluminium-Dotierung nicht mit berücksichtigt wurde. Als Sekundärphasen wurden TiSi₂ und Tick identifiziert.

### 2. Beispiel:

In diesem Fall wurden zur Herstellung von Ti₃AlC₂ Pulver Ti (99,9 % rein, -325 mesh ≅ 44 µm), Al (99,9 % rein, -325 mesh ≅ 44 µm) und Graphit (99,99 % rein) mit KBr vermischt, wobei ein Mol-Verhältnis von Ti/Al/C von 3:1:2 eingestellt wurde. Das Massenverhältnis von Ti+Al+C zu NaCl betrug 1:1.

Die Pulver wurden nass, d. h. in Ethanol, und unter Zuhilfenahme von Zirkonium Kugeln mit einem Durchmesser von 5 mm für 24 Stunden vermischt. Die Schlammmischung wurde anschließend in einem Rotationsverdampfer bei 60 °C vorgetrocknet und anschließend in einem Ofen bei 70 °C für weitere 24 Stunden getrocknet.

Das getrocknete Pulver wurde uniaxial bei 200 MPa verpresst (Pellets) und anschließend mit KBr ummantelt. Dazu wurden die Pellets in einen mit KBr gefüllten Tiegel mit einem größeren Durchmesser als die Pellets gegeben, mit KBr abgedeckt und anschließend erneut bei 200 MPa verpresst. Die so mit KBr ummantelten Pellets wurden zusätzlich bei einem Druck von 300 MPa kalt isostatisch verpresst.

Anschließend wurden die Pellets in ein Bett aus KBr eingebettet und in einem Schmelztiegel unter Luft bis auf Temperaturen von ca. 1250 °C aufgeheizt und eine Stunde bei dieser Temperatur gehalten. Der Schmelzpunkt von reinem KBr beträgt 734 °C. Nach der Abkühlung wurde das KBr-Salz mit Wasser abgewaschen und so das Pellet mit der reaktiven Pulvermischung erhalten.

Die Charakterisierung der Pulvermischung erfolgte ebenfalls mittels Röntgenbeugung. Es wurde Ti₃AlC₂ als Hauptphase mit einer Reinheit von mehr als 98 % nachgewiesen. Als Sekundärphase wurde TiC identifiziert.

### 3. Beispiel:

In diesem Fall wurden zur Herstellung von Cr₂AlC Pulver Cr (99,9 % rein, -60 mesh ≅ 250 µm), Al (99,9 % rein, -325 mesh ≅ 44 µm) und Graphit (99,99 % rein) mit KBr vermischt, wobei ein Mol-Verhältnis von Cr/Al/C von 2:1:1 eingestellt wurde. Das Massenverhältnis von Cr+Al+C zu KBr betrug 1:1.

Die Pulver wurden nass, d. h. in Ethanol, und unter Zuhilfenahme von Zirkonium Kugeln mit einem Durchmesser von 5 mm für 24 Stunden vermischt. Die Schlammmischung wurde anschließend in einem Rotationsverdampfer bei 60 °C vorgetrocknet und anschließend in einem Ofen bei 70 °C für weitere 24 Stunden getrocknet.

Das getrocknete Pulver wurde uniaxial bei 200 MPa verpresst (Pellets) und anschließend mit KBr ummantelt. Dazu wurden die Pellets in einen mit KBr gefüllten Tiegel mit einem größeren Durchmesser als die Pellets gegeben, mit KBr abgedeckt und anschließend erneut wieder bei 200 MPa verpresst. Die so mit KBr ummantelten Pellets wurden zusätzlich bei einem Druck von 300 MPa kalt isostatisch verpresst.

Anschließend wurden die Pellets in ein Bett aus KBr eingebettet und in einem AluminiumSchmelztiegel unter Luft bis auf Temperaturen von ca. 1250 °C aufgeheizt und eine Stunde bei dieser Temperatur gehalten. Nach der Abkühlung wurde das KBr-Salz mit Wasser abgewaschen und so das Pellet mit der reaktiven Pulvermischung erhalten.

Die Charakterisierung der Pulvermischung erfolgte ebenfalls mittels Röntgenbeugung. Es wurde Cr₂AlC als Hauptphase mit einer Reinheit von mehr als 98 % nachgewiesen. Als Sekundärphase wurde Cr₇C₃ identifiziert.

### 4. Beispiel:

Im vorliegenden Fall wurden als Beispiel für die Herstellung eines nichttypischen MAX-Phasen-Pulvers sondern für ein Carbid Pulver Ti (99,9 % rein, -325 mesh ≅ 44 µm) und Graphit (99 % rein) mit KBr vermischt, wobei ein Mol-Verhältnis von Ti/C von 1:1 eingestellt wurde. Das Massenverhältnis von Ti+C zu KBr betrug ebenfalls 1:1.

Die Pulver wurden nass, d. h. in Ethanol, und unter Zuhilfenahme von Zirkonium Kugeln mit einem Durchmesser von 5 mm für 24 Stunden vermischt. Die Schlammmischung wurde anschließend in einem Rotationsverdampfer bei 60 °C vorgetrocknet und anschließend in einem Ofen bei 70 °C für weitere 24 Stunden getrocknet.

Das getrocknete Pulver wurde uniaxial bei 200 MPa in Form von Zylindern verpresst (Pellets) und anschließend mit KBr ummantelt. Dazu wurden die Pellets in einen mit KBr gefüllten Tiegel mit einem größeren Durchmesser als die Pellets gegeben, mit KBr abgedeckt und anschließend erneut bei 200 MPa verpresst. Die so mit KBr ummantelten Pellets wurden zusätzlich bei einem Druck von 300 MPa kalt isostatisch verpresst.

Anschließend wurden die Pellets in ein Bett aus KBr eingebettet und in einem AluminiumSchmelztiegel unter Luft bis auf Temperaturen von ca. 1200 °C aufgeheizt und eine Stunde bei dieser Temperatur gehalten. Nach der Abkühlung wurde das KBr-Salz mit kochendem Wasser abgewaschen und so das Pellet mit der reaktiven Pulvermischung erhalten.

Die Charakterisierung der Pulvermischung erfolgte ebenfalls mittels Röntgenbeugung. Es wurde TiC als einzige Phase nachgewiesen.

Neben den bislang vorgestellten Ummantelungen mit KBr, welche sich als besonders geeignet herausgestellt hat, gibt es auch die Möglichkeit, die zuvor hergestellten Pellets mit NaCl zu ummanteln. Anders als KBr lässt sich NaCl durch reines Pressen nicht weiter als bis ca. 95 % der theoretischen Dichte verdichten. Die mit NaCl ummantelten Pellets können in Anwesenheit einer übersättigten Lösung des korrespondierenden Salzes, also ebenfalls NaCl, für 24 Stunden bei einer relativen Feuchtigkeit von 75 % bis 85 % gehalten werden. Dabei tritt ein Sintereffekt innerhalb des Salzes auf, der dazu führt, dass die bis dahin noch offenen Poren in der verdichteten Salzummantelung verschlossen werden ^{[5]}.

Obwohl dieser Verfahrensschritt sehr zeitintensiv ist, kann er dennoch bei entsprechender Skalierung insgesamt zu einer Erniedrigung der Herstellungskosten führen.

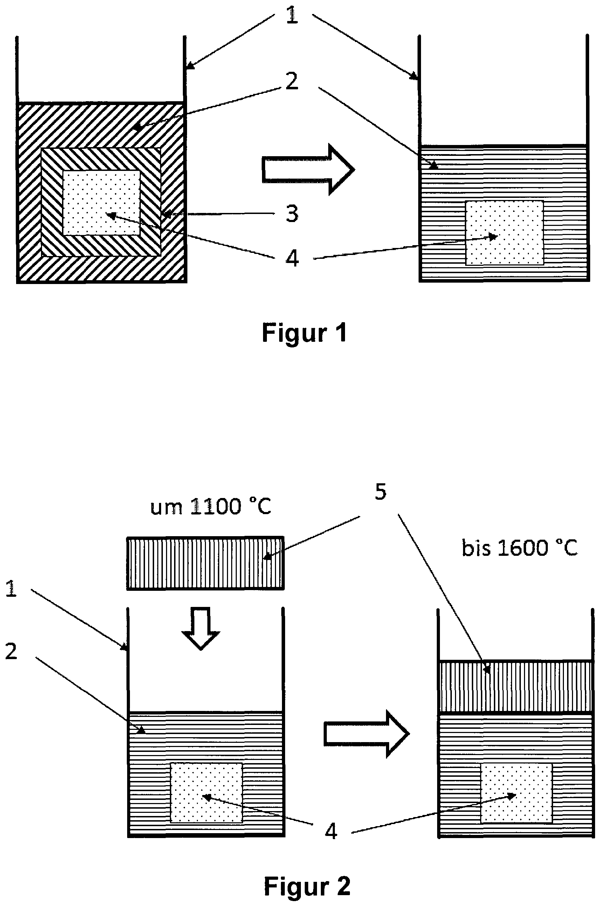

In der Figur 1 ist eine Ausführungsform der Erfindung schematisch dargestellt. In einem Aluminiumschmelztiegel (1) ist in einem porösen Salzbett (2) das Pellet (4), umfassend die stöchiometrischen Ausgangspulver oder Vorstufen sowie wenigstens ein Salz, zusammen mit der salzhaltigen Ummantelung (3) angeordnet. Während des Aufheizvorganges schmelzen das poröse Metallhalogensalzbett (2) sowie die Ummantelung (3) des Pellets (4) auf. Auch das in dem verpressten Pellet befindliche Salz schmilzt und fungiert dann als Flussmittel zur besseren Diffusion der Ausgangspulver. Das Volumen des Salzbetts verringert sich. Die Menge an Salz in dem Metallhalogensalzbett ist dabei so bemessen, dass auch nach dem Aufschmelzen des Salzes das Pellet noch vollständig von Metallhalogensalz umgeben ist, so dass die Zufuhr von Sauerstoff aus der umgebenen Luft zum Pellet ausgeschlossen werden kann.

In Figur 2 ist eine weitere Ausgestaltung des erfinderischen Verfahrens zu sehen, bei der zunächst gemäß Figur 1 in einem Aluminiumschmelztiegel (1) das Pellet (4), umfassend die stöchiometrischen Ausgangspulver oder Vorstufen sowie wenigstens ein Metallhalogensalz, zusammen mit der salzhaltigen Ummantelung (3) in einem porösen Metallhalogensalzbett (2) angeordnet wird und zusammen bis auf Temperaturen oberhalb der Schmelztemperatur des Salzes (2) und weiter bis auf Temperaturen oberhalb der Schmelztemperatur des verwendeten Silikats (5) aufgeheizt wird. Das ebenfalls geschmolzene Silikat (5) wird zu dem geschmolzenen Salz gegeben, wobei sich aufgrund des Dichteunterschieds vorteilhaft eine Schichtung ergibt, bei dem das geschmolzene Silikat auf dem geschmolzenen Salz aufschwimmt. Auf diese Weise kann ein nachteiliges Verdunsten des Metallhalogensalzes auch bei höheren Temperaturen bis hin zu 1600 °C vermieden werden.

KBr ist ein bei Raumtemperatur hochduktiles Alkalimetallhalogenidsalz. Es konnte gezeigt werden, dass Kaliumsalze (KCl) von Hand verformt werden können. Dass die Verkapselung von KBr als Barriere zwischen der Atmosphäre und der Probe in der Vorsalzschmelze wirkt, zeigt die Messung der Dichte und Gasdurchlässigkeit an einer 4 mm dicken KBr-Scheibe, die bei Raumtemperatur kaltgepresst wird. Die Scheibe wurde uniaxial bei 200 MPa und dann isostatisch unter 300 MPa gepresst. Die geometrische Dichte betrug 98 % des theoretischen Wertes. Die KBr-Scheibe wurde mit einer äußeren Kraft auf einen Dichtring gesetzt, um sie zu sichern. Ein Helium/Luft-Gemisch wurde durch die KBr-Scheibe geführt und der Helium/Luft-Ausfluss auf der anderen Seite der Scheibe gemessen. Die Permeabilitätswerte von Helium und Luft durch die KBr-Scheibe liegen bei 1,4·10⁻⁷ hPa·dm³·s⁻¹, was darauf hindeutet, dass die Verkapselung der Probe durch KBr gasdicht ist.

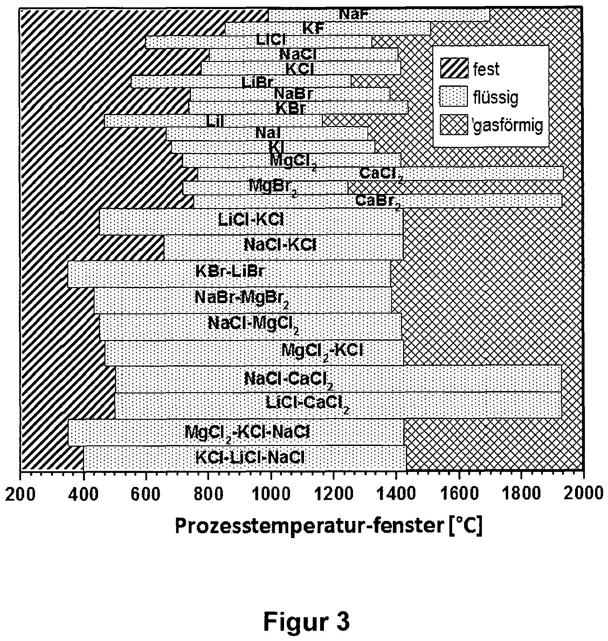

In der Figur 3 sind für verschiedene Metallhalogensalze die Zustände für die feste, flüssige und gasförmige Phase in Abhängigkeit von der Temperatur eingetragen, die so die Auswahl bezüglich geeigneter Prozessfenster für die erfindungsgemäße Synthese ermöglichen.

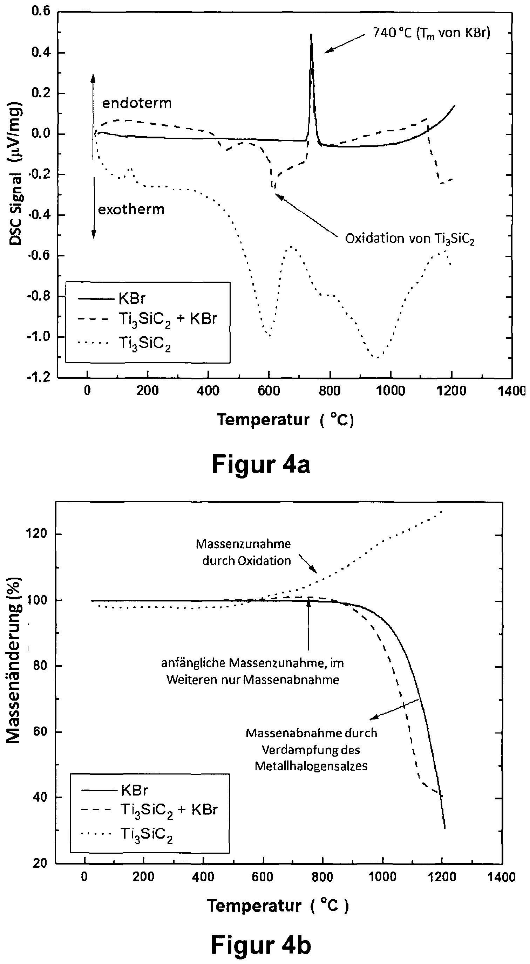

Ferner wurden thermische Untersuchungen (engl. Differential Scanning Calorimetry, DSC) und thermogravimetrische Untersuchungen für das System Ti₃SiC₂ mit KBr als Metallhalogenidsalz (Figuren 4a und 4b) durchgeführt, die die abschirmende Wirkung des Metallhalogenidsalzes KBr bei der Synthese unter Luft verdeutlichen.

Die thermische Analyse (DSC) wurde in Luft an Proben mit und ohne Ummantelung von KBr durchgeführt (Figur 4a), um die Verhinderung der Oxidation aufgrund der gasdichten Wirkung der KBr-Ummantelung zu bestätigen. Die Proben ohne Ummantelung zeigen eine starke Oxidation und eine deutliche Massenzunahme, während die zusätzlich ummantelten Proben nur eine geringe Oxidation aufweisen. Die Oxidation ist bei der Verkapselung deutlich geringer und endet nach Erreichen des Schmelzpunktes von KBr.

In dieser Anmeldung zitierte Literatur:
[1] W. Jeitschko, H. Nowotny, Die Kristallstruktur von Ti3SiC2 - ein neuer Komplexcarbid-Typ, Monatshefte für Chemie - Chemical Monthly, March 1967, Volume 98, Issue 2, Pages 329 - 337.
[2] Michael W. Barsoum, Tamnr el-Raghy, Synthesis and Characterization of a Remarkable Ceramic: Ti3SiC2, Journal of the American Chemical Society, Volume 79, Issue 7, July 1996 , Pages 1953 - 1956.
[3] T. Goto, T. Hirai, Chemically vapor deposited Ti3SiC2, Materials Research Bulletin, Volume 22, Issue 9, September 1987, Pages 1195 - 1201.
[4] Xue Guo, Junxia Wang, Shiyuan Yang, Long Gao, Bin Qian, Preparation of Ti3SiC2 powders by the molten salt method, Materials Letters, Volume 111, 15 November 2013, Pages 211 - 213.
[5] Jing Guo, Hanzheng Guo, Amanda L. Baker, Michael T. Lanagan, Elizabeth R. Kupp, Gary L. Messing, and Clive A. Randall, Cold Sintering: A Paradigm Shift for Processing and Integration of Ceramics, Angewandte Chemie, International Edition, Volume 55, Issue 38, Version of Record online: 11 AUG 2016.
[6] R. Yang et al., Molten salt synthesis of Mo2C powder using a mechanically milled powder, Mater. Lett., 61 , 2007, Pages 4815-4817.
[7] W.B. Tian et al., Cr2AlC powders prepared by molten salt method, JOURNAL OF ALLOYS AND COMPOUNDS, ELSEVIER SEQUOIA, Vol. 461, Nr. 1-2, 11 Augustus 2008, Pages L5-L10.
[8] R. Yang et. al, Molten salt synthesis of tungsten carbide powder using a mechanically activated powder, INTERNATIONAL JOURNAL OF REFRACTORY METALS AND HARD MATERIALS, Vol. 29, Nr. 1, January 2011, Pages 138-140.

## Patentansprüche

1. Verfahren zur Herstellung eines nicht oxidischen, keramischen Pulvers, in Form eines Pellets, umfassend wenigstens ein Nitrid, ein Karbid, ein Borid oder wenigstens eine MAX-Phase mit der allgemeinen Zusammensetzung Mₙ₊₁AXₙ,
- mit M = wenigstens ein Element aus der Gruppe der Übergangselemente bestehend aus Sc, Ti, V, Cr, Zr, Nb, Mo, Hf und Ta,
- mit A = wenigstens ein A-Gruppen-Element aus der Gruppe bestehend aus Si Al, Ga, Ge, As, Cd, In, Sn, Tl und Pb,
- mit X = Kohlenstoff (C) und/oder Stickstoff (N) und/oder Bor (B) und
- mit n = 1, 2 oder 3,
bei dem stöchiometrische Mengen an elementaren Ausgangsstoffen oder anderen Vorstufen, die die notwendigen Elemente zur Ausbildung des Nitrids, des Karbids, des Borids oder der wenigstens einer MAX-Phase umfassen, mit wenigstens einem Metallhalogensalz (NZ) vermischt und zu einem Pellet (4) verpresst werden,
***dadurch gekennzeichnet, dass***
- das verpresste Pellet (4) mit wenigstens einem Metallhalogensalz ummantelt und nochmals verpresst wird (3) und
- anschließend in einem weiteren Metallhalogensalzbett (NZ) (2) gemeinsam aufgeheizt werden.

2. Verfahren nach Anspruch 1, bei dem das Mischen der Ausgangstoffe oder anderen Vorstufen mit dem Metallhalogensalz in einem nicht reaktiven Lösungsmittel oder trocken erfolgt.

3. Verfahren nach einem der Ansprüche 1 bis 2, bei dem das Mischen in einer Kugelmühle erfolgt.

4. Verfahren nach einem der Ansprüche 1 bis 3, bei dem die Aufheizung wenigstens bis zu einer Temperatur erfolgt, die oberhalb der Schmelztemperatur des eingesetzten Metallhalogensalzes erfolgt.

5. Verfahren nach einem der Ansprüche 1 bis 4, bei dem ein Metallhalogensalz (NZ) mit N = wenigstens ein Element aus der Gruppe bestehend aus Li, Na, K, Rb, Cs, Mg, Be, Ca, Ba; und Z = wenigstens ein Element aus der Gruppe bestehend aus F, Cl, Br, I; oder eine Mischung entsprechender Metallhalogensalze eingesetzt wird.

6. Verfahren nach einem der Ansprüche 1 bis 5, bei dem die Mischung, umfassend die elementaren Ausgangsstoffe oder andere Vorstufen und wenigstens ein Metallhalogensalz, als trockene Mischung zunächst zu einem Pellet (4) verpresst wird.

7. Verfahren nach vorhergehendem Anspruch 6, bei dem die Mischung zunächst uniaxial und anschließend kalt-isostatisch zu einem Pellet (4) verpresst wird.

8. Verfahren nach einem der Ansprüche 1 bis 7, bei dem für den Pressschritt ein Druck zwischen 10 MPA und 1000 MPA angewendet wird

9. Verfahren nach einem der Ansprüche 1 bis 8,
bei dem für den Pressschritt der Ummantelung ein Druck zwischen 10 MPA und 1000 MPA angewendet wird.

10. Verfahren nach einem der Ansprüche 1 bis 9,
bei dem das mit einem Metallhalogensalz ummantelte (3) Pellet (4) in einem Metallhalogensalzbett (2) angeordnet wird, und zusammen auf Temperaturen oberhalb der Schmelztemperatur des Metallhalogensalzes aufgeheizt wird.

11. Verfahren nach einem der Ansprüche 1 bis 10,
bei dem das Aufheizen des Metallhalogensalzbetts in Anwesenheit von Sauerstoff erfolgt.

12. Verfahren nach einem der Ansprüche 1 bis 11,
bei dem zu dem geschmolzenen Metallhalogensalzbett (2) mit dem Pellet (4) zusätzlich noch ein geschmolzenes Silikat gegeben wird, welches als Schicht auf dem geschmolzenen Metallhalogensalzbett aufschwimmt.

13. Verfahren nach vorhergehendem Anspruch 12,
bei dem das geschmolzene Metallhalogensalzbett und das geschmolzene Silikat auf dieselbe Temperatur erwärmt werden, bevor das Silikat dem geschmolzenen Metallhalogensalzbett zugegeben wird.

14. Verfahren nach einem der Ansprüche 1 bis 13,
bei dem das Metallhalogensalz nach Abkühlung in einer Flüssigkeit aufgelöst wird, sodass das Pellet entnommen werden kann.

15. Verfahren nach vorhergehendem Anspruch 14,
bei dem das Metallhalogensalz in Wasser oder einer wässrigen Lösung oder einem kurzkettigen Alkohol aufgelöst wird.

## Claims

1. A method for producing a non-oxide, ceramic powder in the form of a pellet, comprising at least a nitride, a carbide, a boride or at least one MAX phase with the general composition Mₙ₊₁AXₙ
- with M = at least one element from the group of the transition elements consisting of Sc, Ti, V, Cr, Zr, Nb, Mo, Hf and Ta,
- with A = at least one A group element from the group consisting of Si Al, Ga, Ge, As, Cd, In, Sn, Tl and Pb,
- with X = carbon (C) and/or nitrogen (N) and/or boron (B) and
- with n = 1, 2 or 3,
wherein stoichiometric amounts of elementary starting materials or other precursors which comprise the required elements for the formation of the nitride, the carbide, the boride or the at least one MAX phase, are mixed with at least one metal halide salt (NZ) and pressed to a pellet (4),
**characterized in that**
- the pressed pellet (4) is enveloped with at least one metal halide salt and pressed (3) once more and
- are subsequently heated together in a further metal halide salt bath (NZ) (2).

2. The method according to claim 1,
wherein the mixing of the starting materials or other precursors with the metal halide salt is carried out in a non-reactive solvent or dry.

3. The method according to any one of claims 1 to 2,
wherein the mixing is carried out in a pebble mill.

4. The method according to any one of claims 1 to 3,
wherein the heating is carried out at least to a temperature which is carried out above the melting temperature of the metal halide salt used.

5. The method according to any one of claims 1 to 4,
wherein a metal halide salt (NZ) with N = at least one element from the group consisting of Li, Na, K, Rb, Cs, Mg, Be, Ca, Ba;
and Z = at least one element from the group consisting of F, Cl, Br, I;
or a mixture of corresponding metal halide salts is used.

6. The method according to any one of claims 1 to 5,
wherein the mixing, comprising the elementary starting materials or other precursors and at least one metal halide salt, is initially pressed to a pellet (4) as dry mixture.

7. The method according to preceding claim 6,
wherein the mixing is initially uniaxially and subsequently cold-isostatically pressed to a pellet (4).

8. The method according to any one of claims 1 to 7,
wherein a pressure between 10 MPA and 1000 MPA is used for the pressure step.

9. The method according to any one of claims 1 to 8,
wherein a pressure between 10 MPA and 1000 MPA is used for the pressure step of the enveloping.

10. The method according to any one of claims 1 to 9,
wherein the pellet (4) which is enveloped (3) with a metal halide salt is arranged in a metal halide salt bed (2) and together is heated to temperatures above the melting temperature of the metal halide salt.

11. The method according to any one of claims 1 to 10,
wherein the heating of the metal halide salt bed is carried out in the presence of oxygen.

12. The method according to any one of claims 1 to 11,
wherein further a molten silicate is added to the molten metal halide salt bed (2) with the pellet (4), the silicate floating as a layer on the molten metal halide salt bed.

13. The method according to preceding claim 12,
wherein the molten metal halide salt bed and the molten silicate are heated to the same temperature before the silicate is added to the molten metal halide salt bed.

14. The method according to any one of claims 1 to 13,
wherein the metal halide salt is dissolved in a liquid after cooling so that the pellet can be removed.

15. The method according to preceding claim 14,
wherein the metal halide salt is dissolved in water or an aqueous solution or a short-chain alcohol.

## Revendications

1. Procédé de production d'une poudre céramique non oxydée, sous la forme d'une pastille, comprenant au moins un nitrure, un carbure, un borure ou une phase MAX de composition générale Mₙ₊₁AXₙ,
- avec M = au moins un élément du groupe des éléments de transition constitué de Sc, Ti, V, Cr, Zr, Nb, Mo, Hf et Ta,
- avec A = au moins un élément de groupe A du groupe constitué de Si, Al, Ga, Ge, As, Cd, In, Sn, Ti et Pb,
- avec X = carbone (C) et/ou azote (N) et/ou bore (B) et
- avec n = 1, 2 ou 3,
dans lequel on mélange des quantités stœchiométriques de substances de départ élémentaires ou d'autres précurseurs, qui comprennent les éléments nécessaires pour la constitution du nitrure, du carbure, du borure ou de la au moins une phase MAX, à au moins un sel d'halogène métallique (NZ) et on les comprime en une pastille (4),
***caractérisé en ce que***
- on enrobe la pastille (4) comprimée d'au moins un sel d'halogène métallique et on la comprime (3) encore une fois et
- on les chauffe ensuite conjointement dans un autre lit (NZ) (2) de sel d'halogène métallique.

2. Procédé suivant la revendication 1,
dans lequel le mélange des substances de départ ou d'autres précurseurs au sel d'halogène métallique s'effectue dans un solvant non réactif ou à sec.

3. Procédé suivant l'une des revendications 1 à 2,
dans lequel le mélange s'effectue dans un broyeur à boulets.

4. Procédé suivant l'une des revendications 1 à 3,
dans lequel le chauffage s'effectue au moins jusqu'à une température, qui est supérieure au point de fusion du sel d'halogène métallique utilisé.

5. Procédé suivant l'une des revendications 1 à 4,
dans lequel on utilise un sel d'halogène métallique (NZ) avec N = au moins un élément du groupe constitué de Li, Na, K, Rb, Cs, Mg, Be, Ca, Ba ;
et Z = au moins un élément du groupe constitué de F, Cl, Br, I ;
ou un mélange des sels d'halogène métallique correspondant.

6. Procédé suivant l'une des revendications 1 à 5,
dans lequel on comprime le mélange, comprenant les substances de départ élémentaires ou d'autres précurseurs et au moins un sel d'halogène métallique sous la forme d'un mélange sec d'abord en une pastille (4).

7. Procédé suivant la revendication 6 précédente,
dans lequel on comprime le mélange d'abord uni-axialement et ensuite iso-statiquement à froid en une pastille (4).

8. Procédé suivant l'une des revendications 1 à 7,
dans lequel on applique, pour le stade de compression, une pression comprise entre 10 MPA et 1 000 MPA.

9. Procédé suivant l'une des revendications 1 à 8,
dans lequel on applique, pour le stade de compression, de l'enrobage, une pression comprise entre 10 MPA et 1 000 MPA.

10. Procédé suivant l'une des revendications 1 à 9,
dans lequel on met la pastille (4) enrobée (3) de sel d'halogène métallique dans un lit (2) de sel d'halogène métallique, et on les porte ensemble à des températures supérieures au point de fusion du sel d'halogène métallique.

11. Procédé suivant l'une des revendications 1 à 10,
dans lequel le chauffage du lit de sel d'halogène métallique s'effectue en la présence d'oxygène.

12. Procédé suivant l'une des revendications 1 à 11,
dans lequel on ajoute au lit (2) fondu de sel d'halogène métallique ayant la pastille (4) supplémentairement encore un silicate fondu, qui surnage sous la forme d'une couche sur le lit fondu de sel d'halogène métallique.

13. Procédé suivant la revendication 12 précédente,
dans lequel on chauffe le lit fondu de sel d'halogène métallique et de silicate fondu à la même température, avant d'ajouter le silicate au lit fondu de sel d'halogène métallique.

14. Procédé suivant l'une des revendications 1 à 13,
dans lequel on dissout le sel d'halogène métallique après refroidissement dans un liquide, de manière à pouvoir retirer la pastille.

15. Procédé suivant la revendication 14 précédente,
dans lequel on dissout le sel d'halogène métallique dans de l'eau ou dans une solution aqueuse ou dans un alcool à chaine courte.
